# EUROPEAN PATENT SPECIFICATION

(11) **EP 2 250 139 B1**
(45) Date of publication and mention of the grant of the patent: **26.10.2016**
(21) Application number: 07856803.7
(22) Date of filing: 17.12.2007
(51) Int. Cl.: C04B 35/185, C04B 38/00, F01N 3/022, B01D 39/20

(54) **CERAMIC HONEYCOMB STRUCTURES**
KERAMISCHE WABENSTRUKTUREN
STRUCTURES ALVÉOLAIRES EN CÉRAMIQUE

(43) Date of publication of application: 17.11.2010
(73) Proprietor: Imerys, 75007 Paris (FR)
(72) Inventor: ALARY, Jean-André, F-84800 L'Isle sur la Sorgue (FR)
(74) Representative: Nash, David Allan
(86) International application number: PCT/EP2007/011067
(87) International publication number: WO 2009/076985

(56) References cited:
- EP-A- 0 726 234
- WO-A-2004/011124
- US-A- 4 767 731
- US-A- 5 078 818
- US-A- 5 290 739
- US-A- 5 851 326
- US-A1- 2001 048 971
- US-A1- 2006 021 308
- E. TKALCEC ET AL.: "Distribution of titanium and aluminium in sintered mullite" JOURNAL OF MATERIALS SCIENCE, vol. 25, 1990, pages 1816-1820, XP002475806
- DATABASE CA [Online] CHEMICAL ABSTRACTS SERVICE, COLUMBUS, OHIO, US; ZHANG, KEMING ET AL: "Discussion on thermal properties of ceramic honeycomb structures" XP002487135 retrieved from STN Database accession no. 2006:750143 & GONGYE JIARE , 34(4), 55-57 CODEN: GOJIF2; ISSN: 1002-1639, 2005,
- DATABASE CA [Online] CHEMICAL ABSTRACTS SERVICE, COLUMBUS, OHIO, US; HU, DINGJUN ET AL: "Study on ceramic honeycomb" XP002487136 retrieved from STN Database accession no. 2005:655400 & SHANDONG TAOCI , 27(3), 5-8 CODEN: SHTAF9; ISSN: 1005-0639, 2004,
- DATABASE CA [Online] CHEMICAL ABSTRACTS SERVICE, COLUMBUS, OHIO, US; SONG, XIWEN ET AL: "Manufacture of mullite-based honeycomb ceramic for heat generator" XP002487137 retrieved from STN Database accession no. 2004:520598 & NAIHUO CAILIAO , 37(4), 203-204, 210 CODEN: NACAEN; ISSN: 1001-1935, 2003,
- DATABASE CA [Online] CHEMICAL ABSTRACTS SERVICE, COLUMBUS, OHIO, US; XU, YONGGUI ET AL: "Manufacture of ceramic heat storage ball and honeycomb body" XP002487138 retrieved from STN Database accession no. 2002:387799 & CN 1 316 400 A (BAOSHAN IRON AND STEEL CO., LTD., PEOP. REP. CHINA) 10 October 2001 (2001-10-10)

## Description

### Field of the Invention

The present invention relates to ceramic honeycomb structures comprising a mullite phase and a tialite phase, to methods for manufacturing these honeycomb structures, and to uses of such structures.

Also disclosed herein is the use of andalusite for the manufacture of a ceramic honeycomb structure, as well as to the ceramic honeycomb structures containing andalusite, and to the methods for manufacturing these ceramic honeycomb structures.

### Background of the Invention

Ceramic honeycomb structures are known in the art for the manufacture of filters for liquid and gaseous media. However, the most relevant application today is the use of such ceramic bodies as particle filters for the removal of fine particles from the exhaust gas of diesel engines of vehicles (diesel particulates), since those fine particles have been shown to have negative influence on human health.

Several ceramic materials have been described for the manufacture of ceramic honeycomb filters suitable for that specific application. The ceramic material has to fulfill several requirements: First, the material must show sufficient filtering efficiency, i.e., the exhaust gas passing the filter should be substantially free of diesel particulates. However, the filter should not produce a substantial pressure drop, i.e., it must show a sufficient ability to let the exhaust gas stream pass through its walls. These properties generally depend upon the wall parameters (thickness, porosity, pore size, etc.) of the filter.

Furthermore, the material must show sufficient chemical resistance against the compounds present in exhaust gas of diesel engines over a broad temperature range.

Next, the material must be resistant against thermal shock due to the high temperature differences that apply during its life cycle. For example, the filter is in permanent contact with hot exhaust gas during the runtime of the diesel engine; however, there may be a large temperature difference between the filter and the exhaust gas when the engine is started after a period of inactivity. Additionally, after a certain period of use, the filter is loaded with particulates that must be removed to avoid high exhaust gas pressure drop. Normally, the cleaning of the filter is performed by periodically heating the filter to a temperature sufficient to ignite the collected diesel particulates at high temperatures (> 1000 °C). Thus, it is evident that the filter material must show sufficient thermal shock resistance to survive several regeneration cycles comprising rapid heating to temperatures substantially higher than the normal operating temperature. A critical parameter for thermal shock resistance is the thermal conductivity of the material.

It is evident from the above that the material must also have a melting point above the temperatures reached within the filter during the regeneration cycle. Additionally, the material should have a low thermal expansion coefficient to avoid mechanical tensions during the heating and cooling periods. If the above requirements are not fulfillled, mechanical and/or thermal tension may cause cracks in the ceramic material, resulting in a decrease of filtering efficiency.

Since the filters for vehicles are produced in high numbers, the ceramic material should be inexpensive, and the process for its preparation should be cost-effective.

A summary on the ceramic materials known for this application is given in the paper of J. Adler, Int. J. Appl. Ceram. Technol. 2005, 2(6), 429-439.

Several attempts have been made to improve the properties of the ceramic filter material; however, a ceramic material meeting all of the above criteria in an ideal manner has not yet been found. Thus, there is a need in the art for new ceramic filter materials showing improved properties over those of the prior art.

A conventional material known in the art is silicon carbide (SiC). However, this material is expensive and somewhat difficult to handle for the purpose of diesel particulate filter manufacture.

Honeycombs made from ceramic materials based on mullite and/or tialite have been used for the construction of diesel particulate filters. Mullite is an aluminum and silicon containing silicate mineral of variable composition between the two defined phases [3 Al₂O₃ • 2 SiO₂] (the so-called "stoichiometric" mullite, or "3:2 mullite") and [2 Al₂O₃ • 1 SiO₂] (the so-called "2:1 mullite"). The material is known to have a high melting point and fair mechanical properties, but relatively poor thermal shock resistance.

Another ceramic material that has been explored for its use in the field of diesel particulate filters is tialite, an aluminum titanate having the formula [Al₂TiO₅]. The material is known to show a high thermal shock resistance, but reduced mechanical strength. The reduced mechanical strength is expressed, e.g., by the Young modulus, which is 20 GPa for tialite, but 150 GPa for mullite. Additionally, the material tends to thermal instability at the operation conditions of a diesel particulate filter. Moreover, due to its titanium content, it is a relatively expensive material.

Several attempts have been made in the past to combine the positive properties of mullite and tialite, e.g., by developing ceramic materials comprising both phases.

US-A-5290739 describes a crack-free, sintered ceramic article produced by (1) prereacting or doping mullite with titania, hematite (iron oxide) and/or the precursors of these metal oxides; (2) calcining the doped mullite; (3) calcining aluminum-titanate; (4) mixing the calcined, doped mullite and the aluminum-titanate with a binder to form a ceramic batch, which can be optionally shaped, to form a green ceramic article; and (5) firing the green ceramic article at a temperature and for a duration of time sufficient to form the sintered ceramic article. In the example, a green ceramic article having 42.2% mullite and 57.8% aluminum titanate is formed.

WO-A-2004/011124 relates to a diesel exhaust particulate filter comprising a plugged, wall-flow honeycomb filter body composed of porous ceramic material and having a plurality of parallel end-plugged cell channels traversing the body from a frontal inlet end to an outlet end thereof. The porous ceramic contains, expressed in terms of weight percent of the total body, of 60-90%, preferably 70-80%, most preferably 70% iron-aluminum titanate solid solution having a stoichiometry of Al₂(₁₋ₓ)Fe₂ₓTiO₅, where x is 0-0.1, and 10-40%, preferably 20-30%, most preferably 30% mullite (3Al₂O₃.2SiO₂), and consists essentially, expressed in terms of weight percent on the oxide basis, of 3 to 15%, preferably 6 to 12% SiO₂, 55 to 65%, preferably 57 to 61% Al₂O₃, 22 to 40%, preferably 26 to 35% TiO₂, and 0 to 10%, preferably 0.5 to 5% Fe₂O₃. In the example, the ceramic body contains 70wt% iron-aluminum titanate solid solution and 30% mullite.

US-A-4767731 describes sintered aluminum titanate-mullite base ceramics. It is stated that the quantitative relation between aluminum titanate starting material and mullite must be that the aluminum titanate starting material is from 40 to 65% and the mullite raw material is from 35 to 60%. A comparative example is described in which the aluminum titanate starting material is 35% and the mullite raw material is 65wt%. The volume ratio of the mullite to aluminum titanate in the sintered body is not stated.

It has now been found that a ceramic material providing increased mechanical strength in combination with high thermal shock resistance can be manufactured which comprises a high amount of a mullite phase in combination with a minor amount of tialite; i.e., the mullite phase is the dominant phase. Moreover, it has been found that the thermal instability of the tialite phase in such combined ceramic materials is substantially reduced over the prior art compositions.

Moreover, it has been found that the use of andalusite as a raw material for the manufacture of ceramic honeycomb structures leads to ceramic materials showing improved properties in the above application.

Andalusite is a mineral from the group of the so-called sillimanite minerals (kyanite, sillimanite, andalusite). All of those minerals show an identical chemical composition, and the corresponding formula is Al₂SiO₅. Thus, the three minerals represent different polymorphic forms of the same composition. When exposed to high temperatures (sintering conditions of ceramic materials), the sillimanite minerals decompose under the formation of two new phases, a glassy silica phase and a "stoichiometric" mullite phase (or "3:2 mullite" phase). While the mullite phase is known to be chemically resistant against diesel exhaust gas, the presence of the glassy silica phase is undesirable due to its high chemical reactivity with trace components of the exhaust gas. Additionally, although the mullite phase has a high melting point, its thermal conductivity is relatively poor. The glassy phase has a poor thermal stability due to its low melting point. The present invention shows how the above disadvantages of ceramic compositions obtained from andalusite can be overcome. Moreover, it has surprisingly been found that the presence of a certain amount of unreacted andalusite in the final honeycomb structure provides some advantageous properties for the use of the structure as a diesel particulate filter.

### Summary of the Invention

The present invention is directed to a ceramic honeycomb structure comprising a mineral phase of mullite and a mineral phase of tialite, wherein the volume ratio of mullite to tialite is higher than 3:1, or 4:1 or higher, or 5:1 or higher, or 8:1 or higher, or 10:1 or higher. In one embodiment, the mullite phase is 3:2 mullite. In a further embodiment, the tialite phase is enclosed by the mullite phase. In a further embodiment, the mullite is in the form of crystals which are substantially parallel. The amount of mullite in the ceramic honeycomb structure is greater than 75 %, or greater than 80 %, by volume (calculated on the basis of the total volume of the mineral phases of the honeycomb). In a further embodiment, the ceramic honeycomb structure may comprise one or more additional solid mineral phases selected from the group consisting of cordierite, andalusite, zirconia, titania, a silica phase, magnesium oxide, magnesia alumina spinel, silicon carbide, and silicon nitride. In another embodiment, the silicon
carbide is present in the ceramic honeycomb structure in an amount between 4 and 30 % by mass. In another embodiment of the invention the silicon carbide is present in the ceramic honeycomb structure in an amount between 4 and 12%, or between 8 and 12% by mass. The particle size of the silicon carbide in one embodiment is between 0.5 and 20 µm, or between 1 and 15 µm, or between 1 and 10 µm. In another embodiment, the magnesia alumina spinel is present in the ceramic honeycomb structure in an amount between 4 and 30% by mass, or between 4 and 12%, or between 8 and 12% by mass. The particle size of the magnesia alumina spinel in one embodiment is between 0.5 and 20 µm, or between 1 and 15 µm, or between 1 and 10 µm.

In an embodiment, the amount of iron in the honeycomb structure, measured as Fe₂O₃, is less than 5% by weight, and for example may be less than 2% by weight, or for example less than 1% by weight. The structure may be essentially free from iron, as may be achieved for example by using starting materials which are essentially free of iron. Iron content may be measured by XRF.

As noted, the ceramic honeycomb structure may comprise a mineral phase consisting of andalusite. In an embodiment, such an andalusite phase is present in an amount of up to 10% by volume, or up to 8% by volume, or up to 5% by volume or up to 2% by volume, or up to 0.5% by volume (based on the volume of the solid phases of the ceramic honeycomb structure).

In a further embodiment, the ceramic honeycomb structure of the invention is a porous structure, wherein the total pore volume is in the range between 30 % and 70 %, or between 45 % and 65 %. In a further embodiment, the total pore volume is in the range between 40 % and 60 %. (The volume percentages are calculated on the basis of the total volume of mineral phases and pore space.) In a further embodiment, the total pore volume of the structure is in the range between 30 % and 70 %, or between 40 % and 65 %, or between 50 % and 65 % (calculated on the basis of the total volume of mineral phases and pore space).

The present invention also provides a method for producing the above ceramic honeycomb structures, comprising the steps of
a. providing a dried green honeycomb structure comprising mullite and/or one or more mullite-forming compounds or compositions and tialite and/or one or more tialite-forming compounds or compositions; and
b. sintering.

In a further embodiment, the method comprises the steps of
a. providing a green honeycomb structure comprising mullite and/or one or more mullite-forming compounds or compositions and tialite and/or one or more tialite-forming compounds or compositions;
b. drying the green honeycomb structure, and
c. sintering.

In a further embodiment, the method comprises the steps of
a. providing an extrudable mixture comprising mullite and/or one or more mullite-forming compounds or compositions and tialite and/or one or more tialite-forming compounds or compositions;
b. extruding the mixture to form a green honeycomb structure;
c. drying the green honeycomb structure, and
d. sintering.

In a further embodiment of the above method, the mullite-forming composition is a mullite-forming clay composition. In another embodiment, the mullite-forming compound is selected from the group consisting of kyanite, andalusite, and sillimanite. In yet another embodiment, the mullite-forming compound is andalusite.

In a further embodiment of the above method, the extrudable mixture or the green honeycomb structure comprises tialite. The tialite can be present in an amount of between 2.5 % to 10 %, or 4 % to 7 %, by weight (dry weight of the extrudable mixture or the green honeycomb structure). In a further embodiment, the tialite is present in an amount between 2.5 % to 15 %, or between 5 % to 12 %, or between 4 % to 7 % by weight (dry weight of the extrudable mixture).

In a further embodiment of the above method, the tialite-forming composition is a mixture of titania (TiO₂) and alumina (Al₂O₃). In a further embodiment, the alumina is present in the form of particles having a size in the range between 0.01 to 10 µm, or between 0.01 to 1 µm, or between 0.03 to 0.06 µm. In a further embodiment, the alumina is used in the form of colloidal/nanometric solutions. In a further embodiment, the titania is present in the form of particles having a size in the range between 0.01 to 10 µm, or between 0.01 to 1 µm, or between 0.03 to 0.06 µm. In a further embodiment, the titania is present in the form of particles having a size in the range between 0.01 to 10 µm, or between 0.2 to 1 µm, or between 0.2 to 0.5 µm. In a further embodiment, the titania is used in the form of colloidal/nanometric solutions. Where colloidal titania is used, this may be employed together with a non-colloidal form of titania, for example one having a d₅₀ smaller than 1 µm, for example a d₅₀ smaller than 0.5 µm. In a further embodiment, the size of the titania particles is larger than the size of the alumina particles. In a further embodiment, the amount of the alumina in the raw material is higher than the amount of titania.

In a further embodiment of the above method, the extrudable mixture or the green honeycomb structure comprises graphite. In another embodiment, the graphite is present in the form of particles having a median particle diameter (D50) in the range between 1 and 100 µm, or between 5 µm to 50 µm, or between 7 µm and 30 µm, or between 20 µm and 30 µm.

In a further embodiment of the above method, the extrudable mixture or the green honeycomb structure comprises one or more binding agents selected from the group consisting of, methyl cellulose, hydroxymethylpropyl cellulose, polyvinyl butyrals, emulsified acrylates, polyvinyl alcohols, polyvinyl pyrrolidones, polyacrylics, starch, silicon binders, polyacrylates, silicates, polyethylene imine, lignosulfonates, and alginates.

In a further embodiment of the above method, the extrudable mixture or the green honeycomb structure comprises one or more mineral binders. Suitable mineral binder may be selected from the group including, but not limited to, one or more of bentonite, aluminum phosphate, boehmite, sodium silicates, boron silicates or mixtures thereof.

In a further embodiment of the above method, the extrudable mixture or the green honeycomb structure comprises one or more auxiliants (e.g. plasticizers and lubricants) selected from the groups consisting of polyethylene glycols (PEGs), glycerol, ethylene glycol, octyl phthalates, ammonium stearates, wax emulsions, oleic acid, Manhattan fish oil, stearic acid, wax, palmitic acid, linoleic acid, myristic acid, and lauric acid.

In a further embodiment of the above method, the sintering step is at a temperature between 1250°C and 1700°C, or between 1350°C and 1600°C, or between 1400°C and 1550°C, or between 1400°C and 1500°C.

Also disclosed herein is a ceramic honeycomb structure comprising a mineral phase consisting of andalusite. According to this disclosure, the andalusite phase is present in an amount of 0.5% to less than 50%, or 2% to 50%, or 5% to 30%, or 7% to 20%, or comprising 0.5% to 15%, or 2% to 14%, or 4% to 10%, or 5% to 8%, by volume (based on the volume of the solid phases of the ceramic honeycomb structure).

Also disclosed herein is an andalusite-containing ceramic honeycomb structure comprising mullite, which may be present in the form of 3:2 mullite (stoichiometric mullite). According to this disclosure, the volume ratio between andalusite to mullite in the structure is in the range between 1:10 to 1:99, or between 1:10 to 1:80, or between 1:10 to 1:25 (based on the volume of the solid phases of the ceramic honeycomb structure).

Also disclosed herein is an andalusite-containing ceramic honeycomb structure comprising tialite. According to this disclosure, the volume ratio of mullite to tialite in the structure is 2:1 or higher, or 2.5:1 or higher, or 3:1 or higher, or 4:1 or higher, or 5:1 or higher, or 8:1 or higher, or 10:1 or higher (based on the volume of the solid phases of
the ceramic honeycomb structure). In a further embodiment, the tialite phase is enclosed by the mullite phase.

Also disclosed herein is an andalusite-containing ceramic honeycomb structure with a porous structure, wherein the total pore volume is in the range between 30% and 70%, or between 45% and 65%. According to a disclosure, the total pore volume is in the range between 40% and 60%. According to a disclosure, the total pore volume of the structure is in the range between 30% and 70%, or between 40% and 65%, or between 50% and 65% (calculated on the basis of the total volume of mineral phases and pore space).

Also disclosed herein is an andalusite-containing ceramic honeycomb structure which may comprise one or more additional solid mineral phases selected from the group consisting of cordierite, zirconia, titania, a silica phase, magnesium oxide, magnesia alumina spinel (MgAl₂O₄), silicon carbide, and silicon nitride. In another embodiment, the silicon carbide is present in the andalusite-containing ceramic honeycomb structure in an amount between 4 and 30% by mass. According to this disclosure, the silicon carbide is present in the andalusite-containing ceramic honeycomb structure in an amount between 4 and 12%, or between 8 and 12% by mass. The particle size of the silicon carbide in one disclosure is between 0.5 and 20 µm, or between 1 and 15 µm, or between 1 and 10 µm. According to one disclosure, the magnesia alumina spinel is present in the andalusite-containing ceramic honeycomb structure in an amount between 4 and 30% by mass, or between 4 and 12%, or between 8 and 12% by mass. The particle size of the magnesia alumina spinel in one embodiment is between 0.5 and 20 µm, or between 1 and 15 µm, or between 1 and 10 µm.

In one embodiment, the andalusite-containing ceramic honeycomb structure comprises
- 0.5 to 15.0%, or 2 to 12%, or 4 to 10%, or 5 to 8%, or 1 to 6% of andalusite;
- 75.0 to 90.0 % of mullite;
- 2.5 to 20.0%, or 12 to 18%, or 2.5 to 10.0%, or 4 to 7%, of tialite;
- 0 to 2% of rutile and/or anatase; and
- 3.0 to 20.0 % of an amorphous silica phase;
wherein the total amount of the above components is 100 % by volume (based on the volume of the solid compounds).

In an embodiment, the amount of iron in the honeycomb structure, measured as Fe₂O₃, is less than 5% by weight, and for example may be less than 2% by weight, or for example less than 1% by weight. The structure may be essentially free from iron, as may be achieved for example by using starting materials which are essentially free of iron.

In a further embodiment, the invention refers to a diesel particulate filter made using the above ceramic honeycomb structures.

The present invention also provides a method for producing the andalusite-containing ceramic honeycomb structures, comprising the steps of
a. providing a dried green honeycomb structure comprising andalusite; and
b. sintering.

In a further embodiment, the method comprises the steps of
a. providing a green honeycomb structure comprising andalusite;
b. drying the green honeycomb structure, and
c. sintering.

In a further embodiment, the method comprises the steps of
- providing an extrudable mixture comprising andalusite;
- extruding the mixture to form a green honeycomb structure;
- drying the green honeycomb structure; and
- sintering.

In a further embodiment of the above method, the sintering step is at a temperature between 1250 °C and 1700 °C, or between 1350 °C and 1600 °C, or between 1400 °C and 1550 °C, or between 1400°C and 1500°C.

In another embodiment of the above method, the method comprises an additional step of heating the green honeycomb structure to a temperature in the range of 200 °C to 300 °C prior to the sintering step.

In yet another embodiment of the above method, the method comprises the step of heating the green honeycomb structure to a temperature in the range of between 650 °C and 950 °C, or between 650 °C and 900 °C, or between 800 °C and 850 °C prior to the sintering step.

In a further embodiment of the above method, the extrudable mixture or the green honeycomb structure comprises 50 % or more by weight (based on the dry weight of the raw material) of andalusite.

In a further embodiment of the above method, the andalusite is used in the form of particles having a size in the range between 0.1 µm and 125 um, or between 0.1 µm and 100 µm, or between 0.1 µm and 75 µm, or between 25 µm and 100 µm, or between 25 µm and 75 µm.

In a further embodiment of the above method, the andalusite is used in the form of particles having a size in the range between 0.1 µm and 55 µm, or between 10 µm and 55 µm, or between 15 µm and 55 µm, or between 20 µm and 55 µm.

In a further embodiment of the above method, the extrudable mixture or the green honeycomb structure further comprises alumina and/or titania. With regard to the total amount of alumina, the alumina is present in an amount of 25 to 55 %, or 30 to 50 %, or 35 to 48 % (based on the dry weight of the extrudable mixture or the green honeycomb structure). With regard to the amount of titania, the titania is present in an amount of 0.5 to 5 %, or 1 to 4 %, or 2 to 3.5 % (based on the dry weight of the extrudable mixture or the green honeycomb structure). In a further embodiment, the total titania content of the extrudable mixture is present in an amount of 0.5 to 10 %, or 1 to 8 %, or 1 to 6%, or 2 to 4 % by weight (dry weight of the extrudable mixture).

In a further embodiment of the above method, the alumina compound is present in the form of particles having a size in the range between 0.01 to 10 µm, or in the range between 0.01 to 1 µm, or between 0.03 to 0.06 µm. In a further embodiment, the alumina is used in the form of colloidal/nanometric solutions. In a further embodiment, the titania is present in the form or particles having a size in the range between 0.01 to 10 µm, or between 0.01 to 1 µm, or between 0.03 to 0.06 µm. In a further embodiment, the titania is present in the form of particles having a size in the range between 0.01 to 10 µm, or between 0.2 to 1 µm, or between 0.2 to 0.5 µm. In a further embodiment, the titania is used in the form of colloidal/nanometric solutions. Where colloidal titania is used, this may be employed together with a non-colloidal form of titania, for example one having a d₅₀ smaller than 1 µm, for example a d₅₀ smaller than 0.5 µm. In a further embodiment, the size of the titania particles is larger than the size of the alumina particles. In a further embodiment, the amount of the alumina in the raw material is higher than the amount of titania.

In a further embodiment of the above method, the extrudable mixture or the green honeycomb structure comprises 3:2 mullite.

In a further embodiment of the above method, the extrudable mixture or the green honeycomb structure comprises tialite. The tialite can be present in an amount of between 2.5 % to 10 %, or between 4 % to 7 %, by weight (based on the dry weight of the extrudable mixture or the green honeycomb structure). In a further embodiment, the tialite is present in an amount between 2.5 % to 15 %, or between 5 % to 12 %, or between 4 % to 7 % by weight (dry weight of the extrudable mixture).

In a further embodiment of the above method, the raw material comprises a graphite component. The graphite can be present in an amount of 10 % to 20 % by weight (based on the dry weight of the raw material). The graphite material can be used in a particulate form, wherein the particles have a size of less than 200 µm, or less than 150 µm, or less than 100 µm. In another embodiment, the graphite particles have a median particle diameter (D50) between 0 and 100 µm; or between 5 µm to 50 µm, or between 7 µm and 30 µm, or between 20 µm and 30 µm.

In a further embodiment of the above method, the extrudable mixture or the green honeycomb structure comprises one or more binding agents selected from the group consisting of, methyl cellulose, hydroxymethylpropyl cellulose, polyvinyl butyrals, emulsified acrylates, polyvinyl alcohols, polyvinyl pyrrolidones, polyacrylics, starch, silicon binders, polyacrylates, silicates, polyethylene imine, lignosulfonates, and alginates. In a further embodiment of the above method, the extrudable mixture or the green honeycomb structure comprises one or more mineral binders. Suitable mineral binder may be selected from the group including, but not limited to, one or more of bentonite, aluminum phosphate, boehmite, sodium silicates, boron silicates, or mixtures thereof. The binding agents can be present in a total amount between 1.5 % and 15 %, or between 2 % and 9 % (based on the dry weight of the extrudable mixture or the green honeycomb structure).

In a further embodiment of the above method, the extrudable mixture or the green honeycomb structure comprises one or more one or more auxiliants (e.g. plasticizers and lubricants) selected from the groups consisting of polyethylene glycols (PEGs), glycerol, ethylene glycol, octyl phthalates, ammonium stearates, wax emulsions, oleic acid, Manhattan fish oil, stearic acid, wax, palmitic acid, linoleic acid, myristic acid, and lauric acid. The auxiliants can be present in a total amount between 1.5 % and 15 %, or between 2 % and 9 % (based on the dry weight of the extrudable mixture or the green honeycomb structure; if liquid auxiliants are used, the weight is included into the dry weight of the extrudable mixture or the green honeycomb structure).

In one embodiment, the extrudable mixture has the following composition:
- 50 to 80 %, or 50 to 75 %, or 50 to 60 % (wt-%) of andalusite;
- 0.5 to 10 %, or 1 to 4 %, or 2 to 3.5 % (wt-%) of titania (TiO₂);
- 1 to 10 wt-% of alumina (Al₃O₃);
- 10 to 20 wt-% of graphite;
- 2 to 9 wt-% of binder; and
- a total of 2 to 9 wt-% of one or more auxiliants;
wherein the total amount of the above components is 100 wt-% (dry weight of the extrudable mixture).

In an embodiment, the composition may include an amount of iron which is less than 5wt%, measured as Fe₂O₃, or less than 2% by weight, or less than 1% by weight. The structure may be essentially free from iron, as may be achieved for example by using starting materials which are essentially free of iron.

Also disclosed herein is the use of andalusile for the manufacture of a ceramic honeycomb structure, wherein the andalusite is present in the extruded green honeycomb structure in an amount of 50 % or more (weight-% based on the dry weight of the raw material).

Also disclosed here is a raw material for the manufacture of a ceramic honeycomb structure, comprising at least 50%, or between 50% and 55%, by weight of andalusite (based on the dry weight of the raw material). In a further embodiment, the andalusite is present in the raw material in the form of particles present in a size in the range between 0.1 µm and 55 µm, or between 10 µm and 55 µm, or between 15 µm and 55 µm, or between 20 µm and 55 µm. Also disclosed is an andalusite in the form of particles having a size in the range between 0.1 µm and 125 µm, or between 0.1 µm and 100 µm, or between 0.1 µm and 75 µm, or between 25 µm and 100 µm, or between 25 µm and 75 µm. Also disclosed is a raw material suitable for extrusion. Also disclosed is an andalusite used in the raw material in combination with alumina. Also disclosed is an andalusite used in the raw material in combination with titania.

Also disclosed herein is the use of andalusite for the manufacture of a ceramic honeycomb structure, wherein the andalusite is present in an amount between 0.5% to 50%, or 0.5% to 15%, or 2% to 14%, or 4% to 10%, or 5% to 8%, by volume (based on the volume of the solid compounds) of the ceramic honeycomb structure. Also disclosed is andalusite present in a green honeycomb structure in the form of particles present in a size in the range between 0.1 µm and 55 µm, or between 10 µm and 55 µm, or between 15 µm and 55 µm, or between 20 µm and 55 µm. Also disclosed is andalusite in the form of particles having a
size in the range between 0.1 µm and 125 µm, or between 0.1 µm and 100 µm, or between 0.1 µm and 75 µm, or between 25 µm and 100 µm, or between 25 µm and 75 µm

Also disclosed herein is the use of alumina (Al₂O₃) for the manufacture of a ceramic honeycomb structure, wherein the particle size of the alumina is in the range between 0.1 to 10 µm, or between 0.1 to 1 µm, or between 0.03 µm to 0.06 µm.

Also disclosed herein is the use of titania (TiO₂) for the manufacture of a ceramic honeycomb structure, wherein the particle size of the titania is in the range between 0.01 to 10 µm, or between 0.2 to 1 µm, or 0.2 µm to 0.5 µm. According to a disclosure, the particle size of the titania is in the range between 0.1 to 10 µm, or between 0.1 to 1 µm, or between 0.03 µm to 0.06 µm. According to a disclosure, the titaniamay be a colloidal titania. The colloidal titania may be used in combination with a non-colloidal titania as noted above.

Also disclosed herein is the use of alumina or titania for the manufacture of a ceramic honeycomb structure, wherein the alumina is used in the form of a nanometric or colloidal solution. In a further embodiment, alumina and titania are used in combination, wherein the particle size of the titania particles is larger than the particle size of the alumina. In a further embodiment, the alumina or titania are used in combination with andalusite. In a further embodiment, alumina and titania are used in the form of nanometric or colloidal solutions.

Also disclosed herein is a mixture of one or more minerals for the manufacture of a ceramic honeycomb structure, comprising 50% or more by weight (dry weight of the raw material) of andalusite. In a further embodiment, the mixture further comprises alumina and/or titania.

In all of the above embodiments comprising the use of alumina (Al₂O₃), the alumina may be partially of fully replaced by alumina precursor compounds. By the term "alumina precursor compounds", such compounds are understood which may comprise one or more additional components to aluminum (Al) and oxygen (O), which additional components are removed during subjecting the alumina precursor compound to sintering conditions, and wherein the additional components are volatile under sintering conditions. Thus, although the aluminum precursor compound may have a total formula different from Al₂O₃, only a component with a formula Al₂O₃ (or its reaction product with further solid phases) is left behind after sintering. Thus, the amount of alumina precursor compound present in an extrudable mixture or green honeycomb structure according to the invention can be easily recalculated to represent a specific equivalent of alumina (Al₂O₃). Examples for alumina precursor compounds include, but are not limited to aluminum salts such as aluminum phosphates, and aluminum sulphates, or aluminum hydroxides such as boehmite (AlO(OH) and gibbsite (Al(OH)₃). The additional hydrogen and oxygen components present in those compounds are set free during sintering in form of water. Usually, alumina precursor compounds are more reactive in solid phase reactions occurring under sintering conditions, than alumina (Al₂O₃) itself. Moreover, several of the alumina precursor compounds are available in preparations showing very small particle sizes, which also leads to an increased reactivity of the particles under sintering conditions. In one embodiment, the alumina precursor compound is boehmite.

In the ceramic honeycomb structures described in the above embodiments, the optimal pore diameter is in the range between 5 to 30 µm, or 10 to 25 µm. Depending on the intended use of the ceramic honeycombs, in particular with regard to the question whether the ceramic honeycomb structure is further impregnated, e.g., with a catalyst, the above values may be varied. For non-impregnated ceramic honeycomb structures, the pore diameter is usually in the range between 7 and 15 µm, while for impregnated structures, the range is usually between 20 and 25 µm prior to impregnating. The catalyst material deposited in the pore space will result in a reduction of the original pore diameter.

The honeycomb structure of the invention can typically include a plurality of cells side by side in a longitudinal direction that are separated by porous partitions and plugged in an alternating (e.g., checkerboard) fashion. In one embodiment, the cells of the honeycomb structure are arranged in a repeating pattern. The cells can be square, round, rectangular, octagonal, polygonal or any other shape or combination of shapes that are suitable for arrangement in a repeating pattern. Optionally, the opening area at one end face of the honeycomb structural body can be different from an opening area at the other end face thereof. For example, the honeycomb structural body can have a group of large volume through-holes plugged so as to make a relatively large sum of opening areas on its gas inlet side and a group of small volume through-holes plugged so as to make a relatively small sum of opening areas on its gas outlet side.

### Brief Description of the Figures

Figure 1 shows an electron scan of a section through a ceramic honeycomb of Example 1.
Figure 2 shows an electron scan of a section through a ceramic honeycomb of Example 1.

### Detailed Description of the Invention

### Definitions and Methods:

The "dry weight" of the extrudable mixture or of the green honeycomb structure refers to the total weight of any compounds discussed herein to be suitable to be used in the extrudable mixture, i.e., the total weight of the mineral phases and of the binders/auxiliants. The "dry weight" is thus understood to include such auxiliants that are liquid under ambient conditions, but it does not include water in aqueous solutions of minerals, binders or auxiliants if such are used to prepare the mixture.

The term "total alumina" of a mixture refers to the amount of Al₂O₃ present in mineral phases consisting solely of Al₂O₃, as well as to Al₂O₃ present in other mineral phases, such as andalusite.

The term "total titania" of a mixture refers to the amount of TiO₂ present in mineral phases consisting solely of TiO₂, as well as to TiO₂ present in other mineral phases, such as andalusite.

The "total volume of the mineral phases" of a ceramic honeycomb structure refers to the volume of the honeycomb without the pore volume, i.e., only solid phases are considered. The "total volume of the mineral phases and pore space" refers to the apparent volume of the ceramic honeycomb body, i.e. including solid phases and pore volume.

The "particle sizes" and "median particle diameters" of particulate graphite, as used herein is determined by measurements by laser diffraction spectroscopy (Malvern).

The particle size of the andalusite starting material referred to herein represents a range of particle diameters (esd) as measured using a Sedigraph 1500 using the standard protocol. In each case, the lower limit of a range is the d₁₀ value and the upper limit of the range is the d₉₀ value.

The particle sizes of the alumina and titania starting materials referred to herein represent ranges of particle diameters (esd) as measured using static light scattering, for example using a Horiba LA-910 device. In each case, the lower limit of a range is the d₁₀ value and the upper limit of the range is the d₉₀ value. In the case of colloidal titania, such as the S5-300A material used herein, which is quoted by the manufacturer to have a particle size of 30-60nm, the particle size is measured using transmission electron microscopy.

The amounts of mullite, tialite and other mineral phases present in the ceramic honeycomb structure may be measured using qualitative X-ray diffraction (Cu Kα radiation, Rietveld analysis with a 30 % ZnO standard), or any other measurement method which gives an equivalent result. As will be understood by the skilled person, in the X-ray diffraction method, the sample is milled and passed completely through a 45µm mesh. After milling and sieving, the powder is homogenized, and then filled into the sample holder of the X-ray diffractometer. The powder is pressed into the holder and any overlapping powder is removed to ensure an even surface. After placing the sample holder containing the sample into the X-ray diffractometer, the measurement is started. Typical measurement conditions are a step width of 0.01°, a measurement time of 2 seconds per step and a measurement range from 5 to 80° 2≡. The resulting diffraction pattern is used for the quantification of the different phases, which the sample material consists of, by using appropriate software capable of Rietveld refinement. A suitable diffractometer is a SIEMENS D500/501, and suitable Rietveld-Software is BRUKER AXS DIFFRAC*^{plus}* TOPAS.

The d₅₀ or D50 as used herein refers to the mass median particle size, and is the particle diameter that divides the frequency distribution in half, so that 50% of the mass is in particles having a larger diameter and 50% of the mass is in particles having a smaller diameter. The d₁₀ and d₉₀ are to be understand in similar fashion.

The measurement of the particle sizes of components which are present in the sintered honeycomb structure in a particulate form, such as silicon carbide and magnesium alumina spinel may be accomplished by image analysis.

### Preparation of Raw Materials:

The solid mineral compounds suitable for use as raw materials in the present invention (andalusite, alumina, titania, graphite, mullite, tialite, etc.) can be used in the form of powders, suspensions, and dispersions, for the use according to the present invention. Corresponding formulations are commercially available and known to the person skilled in the art. For example, powdered andalusite having a particle size range suitable for the present invention is commercially available under the trade name Kerphalite® (Damrec), powdered graphite having a particle size range suitable for the present invention is available under the trade name Timrex® (Timcal), powdered alumina and alumina dispersions are available from Degussa, and powdered titania and titania dispersions are available from Millennium Chemicals. If necessary, selected cuts of commercially available materials may be made by techniques known in the art, for example a classification technique such as sieving.

Alternatively, mullite and tialite may be prepared by reacting suitable mineral precursor compounds at high temperatures by methods known to the person skilled in the art. A summary is given in the textbook of W. Kollenberg (ed.), Technische Keramik, Vulkan-Verlag, Essen, Germany, 2004.

The most important function of graphite in the raw materials of the present invention is the activity as a pore forming agent during the heating of the green honeycomb structure: At a temperature level above about 650 °C graphite starts to combust, resulting in free pore space in the final ceramic honeycomb structure where the graphite particles had been located in the green honeycomb structure. Thus, the amount and the size distribution of the graphite particles used in the present invention is an important parameter to control the total porosity of the final ceramic honeycomb structure. Another function of the graphite is to assist in extrusion, functioning as a lubricant.

The binding agents and auxiliants used for the present invention are also all commercially available from various sources known to the person skilled in the art.

The function of the binding agent is to provide a sufficient mechanical stability of the green honeycomb structure in the process steps before the heating or sintering step. The additional auxiliants provide the raw material with advantageous properties for the extrusion step (plasticizers, glidants, lubricants, and the like).

The preparation of an extrudable mixture from the mineral compounds (optionally in combination with binders and/or auxiliants) is performed according to methods and techniques known in the art. For example, the raw materials can be mixed in a conventional kneading machine with addition of a sufficient amount of a suitable liquid phase as needed (normally water) to obtain a paste suitable for extrusion. Additionally, conventional extruding equipment (such as, e.g., a screw extruder) and dies for the extrusion of honeycomb structures known in the art can be used. A summary on the technology is given in the textbook of W. Kollenberg (ed.), Technische Keramik, Vulkan-Verlag, Essen, Germany, 2004.

The diameter of the green honeycomb structures can be determined by selecting extruder dies of desired size and shape. After extrusion, the extruded mass is cut into pieces of suitable length to obtain green honeycomb structures of desired format. Suitable cutting means for this step (such as wire cutters) are known to the person skilled in the art.

The extruded green honeycomb structure can be dried according to methods known in the art (e.g., microwave drying, hot-air drying) prior to sintering. Alternatively, the drying step can be performed by exposing the green honeycomb structure to an atmosphere with controlled humidity at predefined temperatures in the range between 20 °C and 90 °C over an extended period of time in a climate chamber, where the humidity of the surrounding air is reduced in a step-by-step manner, while the temperature is correspondingly increased. For example, one drying program for the green honeycomb structures of the present invention is as follows:
- maintaining a relative air humidity of 70 % at room temperature for two days;
- maintaining a relative air humidity of 60 % at 50 °C for three hours;
- maintaining a relative air humidity of 50 % at 75 °C for three hours; and
- maintaining a relative air humidity of 50 % at 85 °C for twelve hours.

### Heating:

The dried green honeycomb structure is then heated in a conventional oven or kiln for preparation of ceramic materials. Generally, any oven or kiln that is suitable to subject the heated objects to a predefined temperature is suitable for the process of the invention.

When the green honeycomb structure comprises organic binder compound and/or organic auxiliants, usually the structure is heated to a temperature in the range between 200 °C and 300 °C prior to heating the structure to the final sintering temperature, and that temperature is maintained for a period of time that is sufficient to remove the organic binder and auxiliant compounds by means of combustion (for example, between one and three hours).

Additionally, when the green honeycomb structure comprises porous graphite as a pore forming agent, the structure is heated to a temperature in the range of 650 °C to 900 °C prior to heating the structure to the final sintering temperature, and that temperature is maintained for a period that is sufficient to remove the graphite particles by means of combustion (for example, between two and four hours).

For example, one heating program for the manufacture of ceramic honeycomb structures of the present invention is as follows:
- heating from ambient temperature to 250 °C with a heating rate of 0.5 °C/min;
- maintaining the temperature of 250 °C for two hours;
- heating to 850 °C with a heating rate of 1.0 °C/min;
- maintaining the temperature of 850 °C for eight hours;
- heating to the final sintering temperature with a heating rate of 2.0 °C/min; and
- maintaining the final sintering temperature for about 1 hour to about three hours.

### Sintering:

The honeycomb structure may be sintered at a temperature in the range from between 1250 °C and 1700 °C, or between 1350 °C and 1600 °C, or between 1400 °C and 1550 °C, or between 1400°C and 1500°C.

For the embodiments of the invention comprising mullite-forming components/compositions and/or tialite-forming compositions, the above components/compositions undergo chemical reactions resulting in the formation of mullite and/or tialite. These reactions, as well as the required reaction conditions, are known to the person skilled in the art. A summary is given in the textbook of W. Kollenberg (ed.), Technische Keramik, Vulkan-Verlag, Essen, Germany, 2004.

For the embodiments of the invention comprising a tialite-forming compositions of alumina and titania, it has been surprisingly found that the mechanical stability of the ceramic honeycomb structures is increased, when the titania component is present in the form of particles which are larger in size than the alumina particles.

For the embodiments of the invention where the extrudable mixture or green honeycomb structure comprises andalusite, during the sintering step the andalusite particles in the raw material decompose to form stoichiometric mullite and glassy silica. In the early stages of mullitization at 1300°C, coarse andalusite crystals dominate, with smaller amounts of mullite and a glassy phase also existing. The mullitization begins at the crystal edges and cracks. It then progresses toward the pure andalusite zones. At higher temperatures, the mullitization progresses until either the mullitization is stopped before full conversion of the andalusite is achieved, or mullitization is complete. The mullite crystals formed during the mullitization of andalusite are aligned substantially in parallel with the same crystallographic orientation-a feature which is believed to enhance the strength of the resultant material. As used in this application, a "substantially parallel" crystal structure refers to a structure that is approximately parallel, but not necessarily parallel, and includes, for example, the crystalline structure that results when andalusite mullitizes. Those skilled in the art will appreciate that determining the crystallographic orientation may be conducted by standard optical examination or examination under a scanning electron microscope.

Generally, it is possible to maintain the sintering process until all andalusite particles are decomposed. However, for those embodiments of the invention where the final ceramic honeycomb structure comprises some andalusite, it is necessary that the sintering process is stopped before all the andalusite particles are totally decomposed. The required total time for the sintering step depends on the size and shape of the green honeycomb structure, the amount of andalusite present in the green honeycomb structure and the desired amount of andalusite in the final ceramic honeycomb structure.

The selected sintering temperature, and the oven/kiln used for the process, can be easily determined by the skilled person.

Surprisingly, it has been found that the use of andalusite particles of selected size (such as of a particle size of between 0.1 µm and 55 µm, or between 10 µm and 55 µm, or between 15 µm and 55 µm or between 20 µm and 55 µm; or such as a particle size of between 0.1 µm and 125 µm, or between 0.1 µm and 100 µm, or between 0.1 µm and 75 µm, or between 25 µm and 100 µm, or between 25 µm and 75 µm.) has a positive influence on the average pore diameter of the final product: in the presence of fine andalusite particles, the average pore diameter is substantially decreased. An additional effect of the use of andalusite with a reduced fines content in the above particle size ranges is the reduced shrinkage of the honeycomb structure during the sintering step. Finally, the amount of amorphous glassy phase in the final ceramic honeycomb structure is reduced by using andalusite within the above particle size ranges.

While the mullite phase is stable under the sintering conditions, the glassy silica phase from the decomposed andalusite is able to react with the alumina phase of the raw material to form additional stoichiometric mullite. However, in the absence of a sufficient amount of alumina, some of the amorphous glassy phase may remain in the sintered honeycomb structure.

### Ceramic Honeycomb Structures:

The mullite phase is the major phase forming the backbone of the ceramic honeycomb structure.

In cases where the extrudable mixture or the green honeycomb structure contains an excess of titania, the final ceramic honeycomb may contain a minor amount of titania, normally in the form of rutile and/or anatase. However, it is desirable to keep the amount of rutile/anatase in a low range (i.e., 2 % by volume or less).

The ceramic honeycomb structures comprising andalusite according to the present invention and prepared according to the processes of the present invention usually comprise the following mineral phases:
- andalusite [Al₂SiO₅];
- stoichiometric mullite [3 Al₂O₃ 2 SiO₂];
- tialite (Al₂TiO₅];
- an amorphous glassy phase of variable composition, and
- optionally a low amount of rutile and/or anatase.

The presence of the tialite phase improves the thermal shock resistance of the ceramic structure. While tialite is normally unstable at temperatures below 1350°C, it has been found that in the structure of the ceramic honeycomb materials of the present invention, the tialite phase is enclosed by the stoichiometric mullite phase, resulting in a stabilization of the tialite phase at temperature conditions below 1350°C. However, a large amount of tialite in the final ceramic honeycomb structure should be avoided, since the tialite compound has not the same mechanical resistance as mullite. Thus, a high amount of tialite may decrease the resistance against mechanical tensions of the ceramic honeycomb structure. A reasonable balance is given if the ratio between the mullite phase and the tialite phase is higher than 3:1, or 4:1 or higher, or 5:1 or higher, or 8:1 or higher, or 10:1 or higher

The andalusite phase is present in the structure of the ceramic honeycomb materials of the present invention as a residual phase within the mullite phase. However, it has surprisingly been found that the presence of this residual andalusite provides the material with some self-repairing properties for the use as diesel particulate filter If the ceramic honeycomb structure is damaged by cracks during the lifetime of the filter, the surface of the crack exposes fresh andalusite. During the regeneration cycle of the filter, the andalusite decomposes into mullite and amorphous silica, which can be melted due to the high temperatures in the regeneration phase. The liquid amorphous compound is able to move into the crack and become solid during the normal operation of the filter (due to the reduced temperatures). The andalusite phase may thus be considered to act as an "internal sealing system" for the ceramic structure, resulting in an enlarged
filtering capacity and/or extended lifetime of the filter. Moreover, since the mullitization of andalusite is an endothermic process, the progressive mullitization of the remaining andalusite during the life cycle of the ceramic honeycomb results in a more efficient behavior during peaks of thermal stress. The amount of andalusite in the final ceramic honeycomb structures is expressed by the ratio between the andalusite phase and the mullite phase, which is in the range of 1:10 to 1:99, or in the range of 1:10 to 1:80, or 1:10 to 1:25.

In other embodiments, the andalusite is fully converted to mullite, thus leaving no residual andalusite. In experiments, it has been found that the complete mullitization of the andalusite gives rise to a material which has a higher breaking strength.

The presence of a silicon carbide component in the ceramic honeycomb structure results in an increase of the thermal conductivity. A similar effect can be reached by the presence of magnesia alumina spinel. Both compounds thus increase the thermal shock resistance of the ceramic honeycomb structure, resulting in e.g. a reduction of cracking due to thermal stress.

Total porosity, median pore size and wall thickness of the ceramic honeycomb structure are parameters that may be optimized dependently from each other to arrive at a honeycomb structure with maximal thermal and mechanical stability together with a minimal back pressure during its use as a diesel particulate filter.

### Further processing

For the use as diesel particulate filters, the ceramic honeycomb structures of the present invention, or the green ceramic honeycomb structures of the present invention can be further processed by plugging, i.e., close certain open structures of the honeycomb at predefined positions with additional ceramic mass. Plugging processes thus include the preparation of a suitable plugging mass, applying the plugging mass to the desired positions of the ceramic or green honeycomb structure, and subjecting the plugged honeycomb structure to an additional sintering step, or sintering the plugged green honeycomb structure in one step, wherein the plugging mass is transformed into a ceramic plugging mass having suitable properties for the use in diesel particulate filters. It is not required that the ceramic plugging mass is of the same composition as the ceramic mass of the honeycomb body. Generally, methods and materials for plugging known to the person skilled in the art may be applied for the plugging of the honeycombs of the present invention.

The plugged ceramic honeycomb structure may then be fixed in a box suitable for mounting the structure into the exhaust gas line of a diesel engine.

### Examples

### Example 1: Preparation of extrudable mixtures and ceramic honeycomb structures of the invention

### Step 1: Preparation of extrudable mixtures, extruding process

The raw materials listed in Table 1 were mixed in a conventional mixer (Eirich mixer) to obtain an extrudable paste that is extruded through a conventional extruder (Dorst V15 or V20 extruder) provided with a suitable die to obtain green honeycomb bodies.

**Table 1: Composition for extrudable mixtures**

| **Raw materials** | **FIDI 20** | **FIDI 23** | **FIDI 24** | **FIDI 25** |
|---|---|---|---|---|
| | % | % | With selected Andalusite >10µm-55µm | With selected Andalusite >20µm-55µm |
| Andalusite | 53,8% | 53,9% | 53,9% | 53,9% |
| Graphite | 15,0% | 15,0% | 15,0% | 15,0% |
| Binder | 3,0% | 3,0% | 3,0% | 3,0% |
| H₂O | 4,0% | 0,0% | 0% | 0% |
| Titania dispersion | 4,0% | 12,4% | 12.4% | 12.4% |
| Alumina dispersion | 15,0% | 10,5% | 10.5% | 10.5% |
| Auxiliant (plasticizer and lubricant) | 5.2% | 5.2% | 5.2% | 5.2% |
| **Total:** | 100,00% | 100,00% | 100,00% | 100,00% |

Andalusite is used in the form of the commercially available product Kerphalite® KF (Damrec). Graphite is used in the form of the commercially available product Timrex® KS75 (Timcal). Titania is used in the form of the commercially available product S5-300A (Millenium Chemicals, dispersion containing 20 % by weight TiO₂). Alumina is used in the form of the commercially available product Aerodisp® W 630 (Degussa, dispersion containing 30 % by weight Al₂O₃). The percentages in the above table refer to the total mass amount of each compound in the extrudable mixture.

The mass leaving the extruder was cut with a wire cutter to obtain green honeycomb structures having a length of 180 millimeters.

### Step 2: Drying

The resulting honeycomb structures were subjected to a drying process in a climate chamber according to the following program:
- maintaining a relative air humidity of 70 % at room temperature for two days;
- maintaining a relative air humidity of 60 % at 50 °C for three hours;
- maintaining a relative air humidity of 50 % at 75 °C for three hours; and
- maintaining a relative air humidity of 50 % at 85 °C for twelve hours.

After the drying step, the dried green honeycomb structures had a length of 154 millimeters.

### Step 3: Heating and Sintering

The dried green honeycomb structures were subjected to the following heating program:
- heating from ambient temperature to 250 °c with a heating rate of 0.5 °C/min;
- maintaining the temperature of 250 °C for two hours;
- heating to 850 °C with a heating rate of 1.0 °C/min;
- maintaining the temperature of 850 °C for eight hours;
- heating to the final sintering temperature with a heating rate of 2.0 °C/min; and
- maintaining the final sintering temperature for two hours.

After the sintering step, the ceramic honeycomb had a length of 152 millimeters or 6 inches.

The characteristics of the final honeycomb structures are summarized in Table 2:

**Table 2: Properties of the ceramic honeycomb structures obtained from the extrudable mixtures of Table 1.**

| **Formulation** | **FIDI20**** | **FIDI20**** | **FIDI23** | **FIDI24** | **FIDI24** | **FIDI25** |
|---|---|---|---|---|---|---|
| Final sintering T(°C) | 1450 | 1550 | 1450 | 1450 | 1500 | 1450 |
| Total Porous volume (%) | 48 | 44 | 46 | 49,5 | 48 | 50 |
| Average Pore diameter (µm) | 3,2 | 4 | 4,2 | 10 | 10 | 15,4 |
| Shrinkage after sintering (%) | 8 | 12,3 | | 6 | 6 | 6 |
| *RUL-T_{0,5%} (°C) | | | 1361 | | | |
| *Crystal phase* | | | | | | |
| Mullite 3:2 (%) | 82 | 84 | 78,6 | 83,3 | 87,5 | 84,5 |
| Andalusite (%) | 3 | 0 | 1,2 | 6,2 | 0,7 | 5,2 |
| Rutile (%) | - | - | 0,4 | 0,1 | 0,7 | 0,4 |
| Tialite Al₂TiO₅ (%) | - | - | 2,6 | 6,4 | 2,7 | 5,7 |

| | | | | | | |
|---|---|---|---|---|---|---|
| *Refractoriness Under Load 0,2N/mm² ** comparative example | | | | | | |

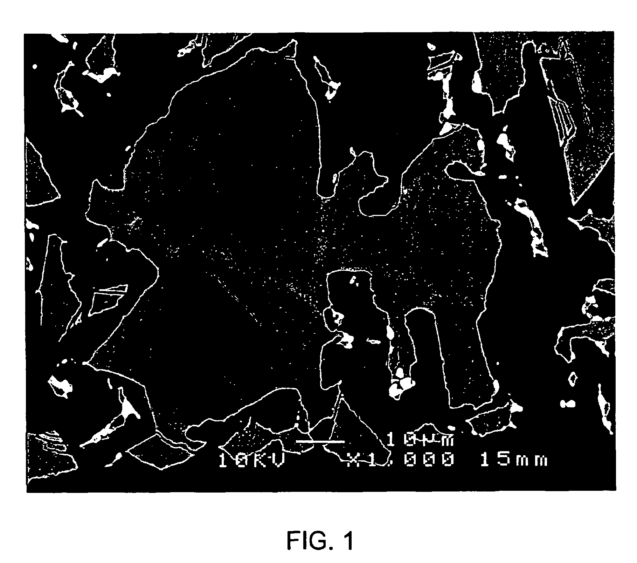

Figure 1 shows an electron scan of a section from a ceramic honeycomb according to Example 1, FIDI 24, sintered at 1450 °C. The black parts represent the pore space of the ceramic honeycomb, while the mullite and andalusite phases are shown in a dark gray tone. The borderline between the two phases can be recognized with the slight difference of homogeneity of the material. The andalusite phase can be seen as a uniform, slightly darker area in the center of bigger grains. Whereas the surrounding areas mullite, which can be recognized due to the veins of light gray tone of glassy silica, which are present inside. Between the grains the light gray phase which intercepts the grains is amorphous glassy phase. The tialite phase is seen in the form of the tiny brightest spot enclosed by the mullite phase.

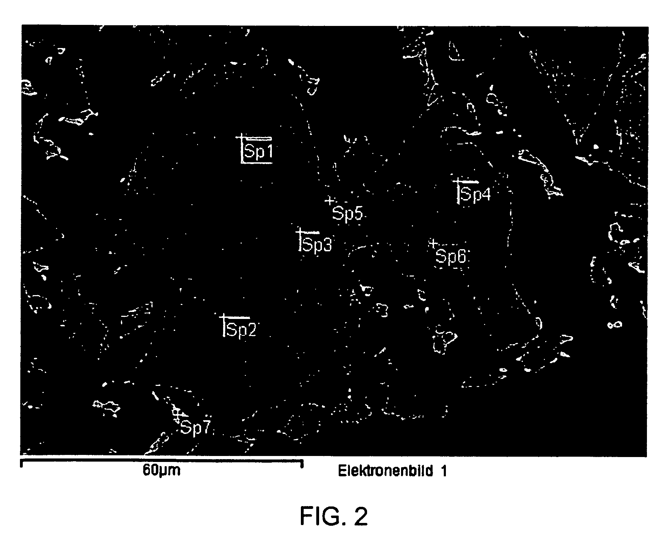

The composition is further specified by the analytical data provided in Table 3. The datapoints refer to the positions of the section shown in Figure 2.

**Table 3: X-ray spectroscopic analysis of Example Composition**

| **Chemical Spectrum** | **Al₂O₃** | **SiO₂** | **K₂O** | **CaO** | **TiO₂** |
|---|---|---|---|---|---|
| Sp 1 - Andalusite | 61.91 | 38.09 | | | |
| Sp 2 - Andalusite | - 61.75 | 38.25 | | | |
| Sp 3 - Mullite | 64.15 | 33.84 | | | 2.01 |
| Sp 4 - Mullite | 62.39 | 35.65 | | | 1.96 |
| Sp 5 - Amorphous phase | 6.61 | 84.46 | 0.92 | 0.73 | 7.28 |
| Sp 6- Amorphous phase | 6.78 | 84.22 | 0.75 | 1.09 | 7.17 |
| Sp 7 - Tialite | 56.93 | | | | 43.07 |

In order to obtain the X-ray spectroscopic data, the following general procedure was followed:
1. The sample is embedded in an acrylic resin for metallographic operations (Struers: SpeciFast hot mounting resin) pressed at 15kN, 180°C for 20mm specimen (Struers prompt press-20)
2. Polish the specimen with polishing slurries up to 1 my fineness (polisher: Struers Tegro Pol 35)
3. Sputter with carbon (Sputtering chamber: BIO-RAD CA 508)
4. Transfer inward to a Scanning Electron Microscope JSM 6400 (Jeol)
5. Observe the sample and fixing the areas which have to be analysed by EDS
6. Run the EDS analysis of emitted characteristic X-rays with the analyser OXFORT INCA ENERGY
7. The analyses, mappings and pictures are done with INCA "The micronanlyse Suite Issue 16".

### Example 2: Preparation of extrudable mixtures according to the invention

The raw materials listed in Table 4 were mixed in a conventional mixer (Eirich mixer) to obtain an extrudable paste that is extruded through a conventional extruder (Dorst V15 or V20 extruder) provided with a suitable die to obtain green honeycomb bodies.

**Table 4: Composition for raw materials**

| **Raw materials** | **FIDI 30** | **FIDI 30** |
|---|---|---|
| | With selected Andalusite >10µm-55µm | With selected Andalusite >20µm-55µm |
| Andalusite | 53,8% | 53,8% |
| Graphite | 13,0% | 13,0% |
| Binder | 5,0% | 5,0% |
| H₂O | 0% | 0% |
| Titania dispersion | 12.4% | 12.4% |
| Alumina dispersion | 10.5% | 10.5% |
| Auxiliant (plasticizer and lubricant) | 5.2% | 5.2% |
| **Total:** | 100,00% | 100,00% |

Andalusite is used in the form of the commercially available product Kerphalite® KF (Damrec). Graphite is used in the form of the commercially available product Timrex® KS75 (Timcal). Titania is used in the form of the commercially available product S5-300A (Millenium Chemicals, dispersion containing 20 % by weight TiO₂). Alumina is used in the form of the commercially available product Aerodisp® W 630 (Degussa, dispersion containing 30 % by weight Al₂O₃). The percentages in the above table refer to the total mass amount of each compound in the extrudable mixture.

The resulting mixtures were extruded and further treated as described above in Example 1.

### Example 3: Preparation of extrudable mixtures according to the invention comprising silicon carbide

The raw materials listed in Table 5 were mixed in a conventional mixer (Eirich mixer) to obtain an extrudable paste that is extruded through a conventional extruder (Dorst V15 or V20 extruder) provided with a suitable die to obtain green honeycomb bodies.

**Table 5: Composition for raw materials:**

| **Raw materials** | **FIDI 21** |
|---|---|
| | %weight |
| Andalusite 55µm | 50,0% |
| Graphite | 15,0% |
| Silicon carbide F800 | 5,0% |
| Binder | 3,0% |
| H₂O | 6,8% |
| Titania dispersion | 7,0% |
| Alumina dispersion | 8,0% |
| Auxiliant (plasticizer and lubricant) | 5.2% |
| **Total:** | 100,00% |

Andalusite is used in the form of the commercially available product Kerphalite® KF (Damrec). Graphite is used in the form of the commercially available product Timrex® KS75 (Timcal). Titania is used in the form of the commercially available product S5-300A (Millenium Chemicals, dispersion containing 20 % by weight TiO₂). Alumina is used in the form of the commercially available product Aerodisp® W 630 (Degussa, dispersion containing 30 % by weight Al₂O₃). The percentages in the above table refer to the total mass amount of each compound in the extrudable mixture.

The resulting mixtures were extruded and further treated as described above in Example 1.

### Example 4: Influence of particle size of alumina raw materials:

The raw materials listed in Table 6 were mixed in a conventional mixer (Eirich mixer) to obtain an extrudable paste that is extruded through a conventional extruder (Dorst V15 or V20 extruder) provided with a suitable die to obtain green honeycomb bodies.

**Table 6: Composition for raw materials:**

| **Raw materials** | **FIDI 12** | **FIDI 14b** |
|---|---|---|
| | % weight | % weight |
| Andalusite | 50,0% (45-75 µm) | 56,7% (55 µm) |
| Graphite | 18,0% | 18,0% |
| Alumina | 9,9% | 9,9% |
| Binder | 1,5% | 1,8% |
| H₂O | 18,0% | 10,3% |
| Auxiliant (plasticizer and lubricant) | 4% | 4% |
| **Total:** | 100,0% | 100,0% |

Andalusite is used in the form of the commercially available product Kerphalite® KF (Damrec). Graphite is used in the form of the commercially available product Timrex® KS 5-44 (Timcal). For FIDI 12, alumina is used in the form of the commercially available product Nabalox® N013 (Nabaltec, mean particle size D50 of 0,13 µm.). For FIDI 14, alumina is used in the form of the commercially available product Locron L® (Clariant, nanocolloidal alumina prepared from atomized aluminum chlorohydrate).

The resulting mixtures were extruded and further treated as described above in Example 1. The crushing resistance of FIDI 12 is 9,6 N; the crushing resistance of FIDI 14b is 92,6 N.

### Example 5: Use of coarsely grained andalusite

The raw materials listed in Table 7 were mixed in a conventional mixer (Eirich mixer) to obtain an extrudable paste that is extruded through a conventional extruder (Dorst V15 or V20 extruder) provided with a suitable die to obtain green honeycomb bodies.

**Table 7: Composition for raw materials:**

| **Raw materials** | **FIDI04** | **FIDI05** |
|---|---|---|
| Andalusite (200 mesh) | 64.12% | 61.28% |
| Graphite | 14.61% | 14.68% |
| Binder | 1.46% | 2.45% |
| H₂O | 17.18% | 18.27% |
| Auxiliant (plasticizer and lubricant) | 2.63% | 3.33% |
| **Total:** | 100.00% | 100.00% |

Andalusite is used in the form of the commercially available product Purusite® (Damrec). Graphite is used in the form of the commercially available product Timrex® KS 44 (Timcal).

The resulting mixtures were extruded and further treated as described above in Example 1.

### Example 6: Preparation of ceramic test bodies of different composition for determination of porosity and mechanical strength

The raw materials listed in Table 8 were mixed in a conventional mixer (Eirich mixer) to obtain extrudable pastes. 12 hours after preparation, the pastes were extruded through a piston press to obtain rods of 8 mm diameter.

**Table 8: Composition for raw materials**

| **Raw materials** | **FIDI 30** | **FIDI 30a** | **FIDI30b** |
|---|---|---|---|
| With selected Andalusite >10µm-55µm | | | |
| Andalusite | 53.8% | 48,7% | 47.7% |
| Graphite | 13% | 11,7% | 11,5% |
| Binder | 4,8% | 4,5% | 4,4% |
| H₂O | 0,0% | 18,7% | 31.8% |
| Titania dispersion | 3,1% | 0,0% | 0,0% |
| Alumina dispersion | 10,2% | 9,5% | 0,0% |
| Anatase (pure TiO2) | 0,0% | 2,3% | 0,0% |
| Auxiliant (plasticizer and lubricant) | 5.1% | 4.9% | 4.6% |
| **Total:** | 100,00% | 100,00% | 100,00% |

Andalusite is used in the form of the commercially available product Kerphalite® KF (Damrec). Graphite is used in the form of the commercially available product Timrex® KS75 (Timcal). Titania is used in the form of the commercially available product S5-300A (Millenium Chemicals, dispersion containing 20 % by weight TiO₂). Alumina is used in the form of the commercially available product Aerodisp® W 630 (Degussa, dispersion containing 30 % by weight Al₂O₃). Anatase is used in the form of a powder having a BET surface of 11,7m²/g; a mean particle diameter d₅₀ of 0,25 µm; and a d₉₀ of 0,77 µm. The percentages in the above table refer to the total mass amount of each compound in the extrudable mixture.

The green rods were stored for 2 days in an atmosphere of room temperature and a relative humidity of 80 %. Subsequently, the rods were dried in a conventional drying oven.

The dried rods were subsequently subjected to the following heating program:
- heating from ambient temperature to 250 °C with a heating rate of 0.5 °C/min;
- maintaining the temperature of 250 °C for two hours;
- heating to 850 °C with a heating rate of 1.0 °C/min;
- maintaining the temperature of 850 °C for eight hours;
- heating to the final sintering temperature of 1450 °C with a heating rate of 2.0 °C/min; and
- maintaining the final sintering temperature of 1450 °C for two hours.

The ceramic rods were then analyzed by qualitative X-ray diffraction (Rietveld analysis with a 30 % ZnO standard); the results are summarized in Table 10 below:

**Table 9: Compositions of final ceramic bodies of Example 6 (comparative examples)**

| Component | **FIDI30 [%]** | **FIDI30a [%]** | **FIDI30b [%]** |
|---|---|---|---|
| 3:2 Mullite | 72 | 69 | 65 |
| Andalusite | 13 | 13 | 20 |
| Amorphous | 8 | 14 | 15 |
| Tialite | 7 | 4 | 0 |

The ceramic rods showed the porosity parameters as summarized below in Table 10 (determined by mercury diffusion as measured using a Thermo Scientific Mercury Porosimeter - Pascal 140):

**Table 10: Porosity parameters of final ceramic bodies of Example 7:**

| Parameter | **FIDI30** | **FIDI30a** | **FIDI30b** |
|---|---|---|---|
| Average Pore Diameter [µm] | 15 | 13-14 | 18-19 |
| Total Porosity [%] | 58-59 | 53-54 | 57-59 |

In the standard three point CMOR test (cold modulus of rupture), the ceramic bodies showed the mechanical strength (expressed by the breaking force) given in Table 11:

**Table 11: Mechanical strength of final ceramic bodies of Example 6:**

| | **FIDI30** | **FIDI30a** | **FIDI30b** |
|---|---|---|---|
| Breaking Force [N] | 154 | 253 | 10 |

Table 10 shows that FIDI 30 and 30b have equivalent desirable porosity. However, the composition 30b without the titania/tialite, has unacceptably low mechanical stability, as is shown in Table 11. FIDI30a has even higher strength than FIDI30, which is caused by the fact that the titanium precursor is larger, namely a micro powder versus the FIDI30 which was manufactured with nano/colloidal solution instead. Additionally, FIDI30a shows a reduced porosity and pore size, which also increases mechanical stability.

### Example 7: Preparation of ceramic test bodies of different composition for determination of porosity and mechanical strength

The raw materials listed in Table 12 were mixed in a conventional mixer (Eirich mixer) to obtain an extrudable paste. 12 hours after preparation, the pastes were extruded through a piston press to obtain rods of 8 mm diameter.

**Table 12: Composition for raw materials (% by weight):**

| **Raw materials** | **FIDI 31** | **FIDI 31 *** | **FIDI 31a** | **FIDI31b** |
|---|---|---|---|---|
| Andalusite | 51.6 | 53.1 | 46.4 | 51.1 |
| Graphite | 12.4 | 12.8 | 13.2 | 13.2 |
| Binder | 4.8 | 4.9 | 5.1 | 5.1 |
| H₂O | 5.4 | 2.8 | 18.2 | 1.0 |
| Titania dispersion | 11.9 | 12.2 | 0.0 | 12.6 |
| Alumina dispersion | 10.1 | 10.3 | 10.6 | 10.6 |
| Anatase (pure TiO2) | 0.0 | 0.0 | 2.5 | 2.5 |
| Auxiliant (plasticizer and lubricant) | 3.9% | 3.9% | 3.9% | 3.9% |
| Total: | 100.00 | 100.00 | 100.00 | 100.00 |

Andalusite is used in the form of a the commercially available product Kerphalite® KF (Damrec), tailored to have a particle size range of from about 25 to 75 µm (d₁₀ to d₉₀). Graphite is used in the form of the commercially available product Timrex® KS75 (Timcal). Titania is used in the form of the commercially available product S5-300A (Millenium Chemicals, dispersion containing 20 % by weight TiO₂). Alumina is used in the form of the commercially available product Aerodisp® W 630 (Degussa, dispersion containing 30 % by weight Al₂O₃). Anatase is used in the form of a powder having a BET surface of 11,7m²/g; a mean particle diameter d₅₀ of 0,25 µm; and a d₉₀ of 0,77 µm. The percentages in the above table refer to the total mass amount of each compound in the extrudable mixture.

The green rods were stored for 2 days in an atmosphere of room temperature and a relative humidity of 80 %. Subsequently, they were dried in a conventional drying oven.

The dried rods were subsequently subjected to the following heating program:
- heating from ambient temperature to 250 °C with a heating rate of 0.5 °C/min;
- maintaining the temperature of 250 °C for two hours;
- heating to 850 °C with a heating rate of 1.0 °C/min;
- maintaining the temperature of 850 °C for eight hours;
- heating to the final sintering temperature of 1450 °C (or 1500°C) with a heating rate of 2.0 °C/min; and
- maintaining the final sintering temperature of 1450 °C (or 1500°C.) for two hours.

The ceramic rods were then analyzed by qualitative X-ray diffraction (Rietveld analysis with a 30 % ZnO standard); the results are summarized in Table 13 below:

**Table 13: Compositions of final ceramic bodies of Example 7 * comparative example**

| Component | FIDI 31 [%] | | FIDI 31 * [%] | | FIDI 31a [%] | | FIDI 31b [%] | |
|---|---|---|---|---|---|---|---|---|
| Firing Temp (°C) | 1450 | 1500 | 1450 | 1500 | 1450 | 1500 | 1450 | 1500 |
| Extrusion pressure (bar) | 20-25 | 20-25 | 34-38 | 34-38 | 10-13 | 10-13 | 40-44 | 40-44 |
| 3:2 Mullite | 75* | 79 | 66* | 78 | 69* | 78 | 67* | 69* |
| Andalusite | 11 | - | 10 | - | 10 | - | 10 | - |
| Amorphous | 7 | 16 | 15 | 15 | 14 | 15 | 8 | 15 |
| Tialite | 7 | 4 | 9 | 6 | 7 | 6 | 14 | 15 |
| Rutile | <1 | 1 | <1 | 1 | <1 | 1 | 1 | 1 |

| | | | | | | | | |
|---|---|---|---|---|---|---|---|---|
| * Comparative example | | | | | | | | |

The ceramic rods showed the porosity parameters as summarized below in Table 14 (determined by mercury diffusion, as measured using a Thermo Scientific Mercury Porosimeter - Pascal 140):

**Table 14: Porosity parameters of final ceramic bodies of Example 7:**

| Parameter | FIDI 31 | | FIDI 31 * | | FIDI 31a | | FIDI 31b | |
|---|---|---|---|---|---|---|---|---|
| Firing Temp (°C) | 1450 | 1500 | 1450 | 1500 | 1450 | 1500 | 1450 | 1500 |
| Average Pore Diameter [µm] | 20.2 | 21.7 | 24.7 | 28.5 | 16.4 | 20.4 | 28.2 | 31.0 |
| Total Porosity [%] | 57.9 | 53.8 | 57.5 | 58.2 | 62.5 | 58.7 | 57.2 | 56.1 |

The FIDI30 composition and a modified FIDI31b composition having the composition set forth in Table 15 below were also used to make a honeycomb structure (firing temperature of 1500°C.) having a diameter of 14.5cm and a length of 20cm. The average pore diameter was 21.7 µm and the total porosity was 47.5%. Square shaped pillars having the length of the honeycomb and a 6cm x 6cm cross-section were cut from the honeycomb, and then shortened to a length of 10cm. A standard three point modulus of rupture (MOR) test was then performed along the axis of the samples. The force required to fracture the samples was 99N for the structure made from the FIDI30 composition and 143N for the structure made from the FIDI3Ib composition.

**Table 15: Composition for raw materials (% by weight) for modified FIDI3Ib:**

| Raw materials | FIDI31b (modified) |
|---|---|
| Andalusite | 50.9 |
| Graphite | 13.1 |
| Binder | 5.1 |
| H₂O | 1.0 |
| Titania dispersion | 12.5 |
| Alumina dispersion | 10.5 |
| Anatase (pure TiO2) | 2.4 |
| Auxiliant (plasticizer and lubricant) | 4.6% |
| Total: | 100.0 |

The preceding description is merely exemplary of various embodiments of the present invention. Those skilled in the art will recognize that various modifications may be made to the disclosed embodiments that would still be within the scope of the invention. The scope of the invention is limited only by the appended claims.

## Claims

1. A ceramic honeycomb structure comprising mullite and tialite, wherein the volume ratio of mullite to tialite is higherthan 3:1, and wherein the amount of mullite in the structure is greater than 75% by volume (calculated on the basis of the total volume of the mineral phases).

2. A ceramic honeycomb structure according to claim 1, wherein the volume ratio of mullite to tialite is 4:1 or higher, or wherein the volume ratio of mullite to tialite is 8:1 or higher, or wherein the volume ratio of mullite to tialite is 10:1 or higher.

3. A ceramic honeycomb structure of claim 1 or 2, **characterized in that** the mullite is a 3:2 mullite.

4. A ceramic honeycomb structure of claims 1 to 3, **characterized in that** the tialite is enclosed by the mullite.

5. A ceramic honeycomb structure according to any one of the preceding claims, further comprising one or more solid mineral phases selected from the group consisting of cordierite, andalusite, zirconia, titania, a silica phase, magnesium oxide, magnesia alumina spinel, silicon carbide, and silicon nitride.

6. A ceramic honeycomb structure according to any preceding claim, comprising an andalusite phase of less than 10% by volume.

7. A ceramic honeycomb structure according to any one of the preceding claims, **characterized in that** the total pore volume of the structure is in the range between 30 % and 70 %, or between 40 % and 65 %, or between 50 % and 65 % (calculated on the basis of the total volume of mineral phases and pore space).

8. A diesel particulate filter made using the ceramic honeycomb structure according to any one of the preceding claims.

9. A method for the manufacture of a ceramic honeycomb structure according to claim 1, comprising the steps of
a. providing a dried green honeycomb structure comprising mullite and/or one or more mullite-forming compounds or compositions and tialite and/or one or more tialite-forming compounds or compositions; and
b. sintering.

10. A method according to claim 9, wherein the mullite-forming compound is selected from the group consisting of kyanite, sillimanite, and andalusite, for example wherein the mullite-forming compound is andalusite.

11. A method according to claim 10, wherein the mullite-forming compound is andalusite and the andalusite has a particle size of from 0.1 µm to 100 µm, or from 0.1 µm to 75 µm, or from 25µm to 75 µm.

12. A method according to claim 9, wherein the dried green honeycomb structure comprises tialite.

13. The method according to claim 12, wherein the tialite is present in an amount between 2.5 % to 15 %, or between 5 % to 12 %, or between 4 % to 7 % by weight (dry weight of the extrudable mixture).

14. A method according to claim 9, wherein the tialite-forming composition is a mixture of titania and alumina and/or a mixture of titania and one or more alumina precursors.

15. A method according to claim 14, wherein the alumina and/or the alumina precursor particle size is between 0.01 to 10 µm, or between 0.01 to 1 µm, or between 0.03 to 0.06 µm.

16. A method according to claim 14, wherein the titania particle size is between 0.01 to 10 µm, or between 0.2 to 1 µm, or between 0.2 to 0.5 µm.

17. A method according to any one of claims 14 to 16, wherein the amount of alumina and/or alumina precursors (calculated as Al₂O₃) is higher than the amount of titania.

18. The method according to claim 9, wherein the sintering step is performed at a temperature between 1250 °C and 1700 °C, or between 1350 °C and 1600 °C, or between 1400 °C and 1500 °C, or between 1400 °C and 1550 °C.

## Patentansprüche

1. Keramische Wabenstruktur, umfassend Mullit und Tialit, wobei das Volumenverhältnis von Mullit zu Tialit größer als 3:1 ist, und wobei die Menge Mullit in der Struktur größer als 75 Vol.-% ist (berechnet auf der Grundlage des Gesamtvolumens der mineralischen Phasen).

2. Keramische Wabenstruktur gemäß Anspruch 1, wobei das Volumenverhältnis von Mullit zu Tialit 4:1 oder größer ist, oder wobei das Volumenverhältnis von Mullit zu Tialit 8:1 oder größer ist, oder wobei das Volumenverhältnis von Mullit zu Tialit 10:1 oder größer ist.

3. Keramische Wabenstruktur gemäß Anspruch 1 oder 2, **dadurch gekennzeichnet, dass** der Mullit ein 3:2-Mullit ist.

4. Keramische Wabenstruktur gemäß Ansprüchen 1 bis 3, **dadurch gekennzeichnet, dass** der Tialit vom Mullit umschlossen ist.

5. Keramische Wabenstruktur gemäß irgendeinem der vorhergehenden Ansprüche, zudem umfassend ein oder mehrere feste mineralische Phasen, ausgewählt aus der Gruppe Cordierit, Andalusit, Zirkonoxyd, Titanoxyd, eine Kieselgelphase, Magnesiumoxyd, Magnesiumoxyd-Aluminiumoxyd-Spinell, Siliciumcarbid und Siliciumnitrid.

6. Keramische Wabenstruktur gemäß irgendeinem vorhergehenden Anspruch, umfassend eine Andalusitphase von geringer als 10 Vol.-%.

7. Keramische Wabenstruktur gemäß irgendeinem der vorhergehenden Ansprüche, **dadurch gekennzeichnet, dass** das Gesamtporenvolumen der Struktur im Bereich zwischen 30% und 70% ist, oder zwischen 40% und 65%, oder zwischen 50% und 65% (berechnet auf der Grundlage des Gesamtvolumens der mineralischen Phasen und des Porenraums).

8. Dieselpartikelfilter, hergestellt aus der keramischen Wabenstruktur aus irgendeinem der vorhergehenden Ansprüche.

9. Herstellungsverfahren für eine keramische Wabenstruktur gemäß Anspruch 1, umfassend die Schritte
a. Bereitstellen einer getrockneten Wabengrünlingstruktur, umfassend Mullit und/oder eine oder mehrere Mullit bildende Verbindungen oder Zusammensetzungen und Tialit und/oder eine oder mehrere Tialit bildende Verbindungen oder Zusammensetzungen; und
b. Sintern.

10. Verfahren gemäß Anspruch 9, wobei die Mullit bildende Verbindung ausgewählt ist aus der Gruppe Kyanit, Sillimanit und Andalusit, zum Beispiel wobei die Mullit bildende Verbindung Andalusit ist.

11. Verfahren gemäß Anspruch 10, wobei die Mullit bildende Verbindung Andalusit ist und der Andalusit eine Teilchengröße von 0,1 µm bis 100 µm hat, oder von 0,1 µm bis 75 µm, oder von 25 µm bis 75 µm.

12. Verfahren gemäß Anspruch 9, wobei die getrocknete Wabengrünlingstruktur Tialit umfasst.

13. Verfahren gemäß Anspruch 12, wobei der Tialit in einer Menge zwischen 2,5 Gew.-% bis 15 Gew.-%, oder zwischen 5 Gew.-% bis 12 Gew.-%, oder zwischen 4 Gew.-% bis 7 Gew.-% vorliegt (Trockengewicht des extrudierbaren Gemischs).

14. Verfahren gemäß Anspruch 9, wobei die Tialit bildende Zusammensetzung ein Gemisch aus Titanoxyd und Aluminiumoxyd ist und/oder ein Gemisch aus Titanoxyd und einem oder mehreren Aluminiumoxyd-Vorläufern.

15. Verfahren gemäß Anspruch 14, wobei die Teilchengröße des Aluminiumoxyds und/oder des Aluminiumoxyd-Vorläufers zwischen 0,01 bis 10 µm ist, oder zwischen 0,01 bis 1 µm, oder zwischen 0,03 bis 0,06 µm.

16. Verfahren gemäß Anspruch 14, wobei die Teilchengröße des Titanoxyds zwischen 0,01 bis 10 µm ist, oder zwischen 0,2 bis 1 µm, oder zwischen 0,2 bis 0,5 µm.

17. Verfahren gemäß irgendeinem der Ansprüche 14 bis 16, wobei die Menge Aluminiumoxyd und/oder Aluminiumoxyd-Vorläufer (berechnet als Al₂O₃) größer ist als die Menge Titanoxyd.

18. Verfahren gemäß Anspruch 9, wobei der Sinterschritt bei einer Temperatur zwischen 1250°C und 1700°C erfolgt, oder zwischen 1350°C und 1600°C, oder zwischen 1400°C und 1500°C, oder zwischen 1400°C und 1550°C.

## Revendications

1. Une structure en nid d'abeille en céramique comprenant mullite et tialite, dans laquelle le rapport en volume de mullite à tialite est supérieur à 3:1 et dans laquelle la quantité de mullite dans la structure est supérieure à 75 % en volume (calculée sur la base du volume total des phases minérales).

2. Une structure en nid d'abeille en céramique selon la revendication 1, dans laquelle le rapport en volume de mullite à tialite est de 4:1 ou supérieur ou dans laquelle le rapport en volume de mullite à tialite est de 8:1 ou supérieur ou dans laquelle le rapport en volume de mullite à tialite est de 10:1 ou supérieur.

3. Une structure en nid d'abeille en céramique de la revendication 1 ou 2, **caractérisée en ce que** la mullite est une mullite 3:2.

4. Une structure en nid d'abeille en céramique des revendications 1 à 3, **caractérisée en ce que** la tialite est renfermée par la mullite.

5. Une structure en nid d'abeille en céramique selon l'une quelconque des revendications précédentes et comprenant en outre une ou plusieurs phases minérales solides sélectionnées parmi le groupe composé de cordiérite, andalousite, zircone, dioxyde de titane, une phase de silice, oxyde de magnésium, oxyde d'aluminium, spinelle de magnésie-alumine, carbure de silicium et nitrure de silicium.

6. Une structure en nid d'abeille en céramique selon l'une quelconque revendication précédente, comprenant une phase d'andalousite de moins de 10 % en volume.

7. Une structure en nid d'abeille en céramique selon l'une quelconque des revendications précédentes, **caractérisée en ce que** le volume total des pores de la structure est dans la plage entre 30 % et 70 % ou entre 40 % et 65 % ou entre 50 % et 65 % (calculé en fonction du volume total des phases minérales et de l'espace des pores).

8. Un filtre à particules diesel fabriqué au moyen de la structure en nid d'abeille en céramique selon l'une quelconque des revendications précédentes.

9. Un procédé de fabrication d'une structure en nid d'abeille en céramique selon la revendication 1, comprenant les étapes suivantes
a. fourniture d'une structure en nid d'abeille crue séchée comprenant la mullite et/ou un ou plusieurs composés ou compositions formant la mullite et la tialite et/ou un ou plusieurs composés ou compositions formant la tialite ; et
b. frittage.

10. Un procédé selon la revendication 9, dans lequel le composé formant la mullite est sélectionné parmi le groupe composé de kyanite, sillimanite et andalousite, par exemple dans lequel le composé formant la mullite est l'andalousite.

11. Un procédé selon la revendication 10, dans lequel le composé formant la mullite est l'andalousite et l'andalousite présente une taille de particule à partir de 0,1 µm à 100 µm ou à partir de 0,1 µm à 75 µm ou à partir de 25 µm à 75 µm.

12. Un procédé selon la revendication 9, dans lequel la structure en nid d'abeille crue séchée comprend la tialite.

13. Le procédé selon la revendication 12, dans lequel la tialite est présente suivant une quantité entre 2,5 % et 15 % ou entre 5 % et 12 % ou entre 4 % et 7 % en poids (poids sec de mélange extrudable).

14. Un procédé selon la revendication 9, dans lequel la composition formant la tialite est un mélange de dioxyde de titane et d'oxyde d'aluminium et/ou un mélange de dioxyde de titane et d'un ou plusieurs précurseurs d'oxyde d'aluminium.

15. Un procédé selon la revendication 14, dans lequel la taille des particules de l'oxyde d'aluminium et/ou du précurseur d'oxyde d'aluminium est entre 0,01 et 10 µm, ou entre 0,01 et 1 µm ou entre 0,03 et 0,06 µm.

16. Un procédé selon la revendication 14, dans lequel la taille des particules de dioxyde de titane est entre 0,01 et 10 µm ou entre 0,2 et 1 µm ou entre 0,2 et 0,5 µm.

17. Un procédé selon l'une quelconque des revendications 14 à 16, dans lequel la quantité d'oxyde d'aluminium et/ou des précurseurs d'oxyde d'aluminium (calculée comme Al₂O₃) est plus élevée que la quantité de dioxyde de titane.

18. Le procédé selon la revendication 9, dans lequel l'étape de frittage est effectuée à une température entre 1 250 °C et 1 700 °C ou entre 1 350 °C et 1 600 °C ou entre 1 400 °C et 1 500 °C ou entre 1 400 °C et 1 550 °C.
